# EUROPÄISCHE PATENTSCHRIFT

(11) **EP 2 996 849 B1**
(45) Veröffentlichungstag und Bekanntmachung des Hinweises auf die Patenterteilung: **18.07.2018**
(21) Anmeldenummer: 14724647.4
(22) Anmeldetag: 15.05.2014
(51) Int. Cl.: B29B 9/06, B29C 47/30, B29C 47/00, B29C 47/08

(54) **EXTRUSIONSKOPF MIT LOCHPLATTE EINER GRANULIERANLAGE**
EXTRUSION HEAD WITH PERFORATED PLATE OF A GRANULATING SYSTEM
TÊTE D'EXTRUSION À PLAQUE PERFORÉE D'UNE INSTALLATION DE GRANULATION

(30) Priorität: 17.05.2013 DE 102013008566
(43) Veröffentlichungstag der Anmeldung: 23.03.2016
(73) Patentinhaber: Maag Automatik GmbH, 63762 Großostheim (DE)
(72) Erfinder: DAHLHEIMER, Stefan, 63801 Kleinostheim (DE); MEIDHOF, Helmuth, 63762 Großostheim (DE); BRAUN, Thomas, 63762 Großostheim (DE)
(74) Vertreter: Spranger, Stephan
(86) Internationale Anmeldenummer: PCT/EP2014/001318
(87) Internationale Veröffentlichungsnummer: WO 2014/183877

(56) Entgegenhaltungen:
- WO-A2-01/94088
- DE-A1- 19 642 389
- DE-C2- 3 532 937
- DE-U1- 20 214 743
- DE-U1-202007 003 495
- US-A- 4 621 996
- US-A- 5 403 176
- US-A- 5 611 983

## Beschreibung

Die Erfindung betrifft einen Extrusionskopf mit Lochplatte einer Granulieranlage. Der Extrusionskopf weist einen Kopfteil, der den Übergang zu einer Extrusionsvorrichtung bildet, und eine Lochplatte mit zentralem Anströmkegel, Düsenkanälen und Lochdüsen der Lochplatte zur Extrusion von Granuliersträngen auf, wobei die Lochplatte mit zentralem Anströmkegel, Düsenkanälen und Lochdüsen an dem Kopfteil lösbar fixiert ist. Der Kopfteil des Extrusionskopfes weist mindestens einen zentralen Schmelzekanal auf, in den der Anströmkegel der Lochplatte hineinragt und den Schmelzstrom auf ringförmig angeordnete Düsenkanäle und auf die sich anschließenden Lochdüsen der Lochplatte verteilt.

Aus der Druckschrift DE 3532937 C2 ist ein Unterwassergranulator 30 bekannt, der einen derartigen Extrusionskopf 31 mit einem Kopfteil 32 mit zentralem Schmelzekanal 44 und mit einer komplex aufgebauten Lochplatte 33 aufweist, wie es die hier zur Verdeutlichung angefügte Figur 6 zeigt. Die aus DE 3532937 C2 bekannte einstückige Lochplatte 33 weist einen Anströmkegel 34, Düsenkanäle 35 und Lochdüsen 36 auf und ist einsatzbedingt einem relativ hohen Verschleiß ausgesetzt, da rotierend umlaufende Granuliermesser 37 an einer Außenkontaktfläche 38 mit Öffnungen 39 der Lochdüsen 36 entlangstreifen, um aus den Öffnungen 39 austretende Granulatstränge in Granulate 40 aufzutrennen, die dann in einem Kühlwasserstrom 41 in Pfeilrichtung A aus dem Unterwassergranulator 30 ausgetragen werden.

Sobald eine derart komplex aufgebaute Lochplatte 33 an der Außenkontaktfläche 38 die vorgegebene Verschleißgrenze erreicht, ist sie mit integriertem Anströmkegel 34, integrierten Düsenkanälen 35 und integrierten Lochdüsen 36 durch eine teure neue Lochplatte 33 zu ersetzen oder kostenintensiv zu recyceln. Hinzu kommt eine beschleunigte Alterung eines derartigen bekannten Extrusionskopfes 31 durch korrosiven Angriff von Schraubköpfen 42 durch den Kühlwasserstrom 41. Die Schraubköpfe 42 von Schraubverbindungen 43, mit denen die komplexe Lochplatte 33 mit dem Kopfteil 32 des Extrusionskopfes 31 gemäß DE 3532937 C2 verbunden ist, sind nämlich schutzlos dem Kühlwasserstrom 41 ausgesetzt. Die Druckschrift DE 20 2007 003 495 U1 beschreibt eine Vorrichtung zur Erzeugung von Granulatkörnern aus einer Kunststoffschmelze und weist dazu eine 3 teilige Lochplatte auf, welche über eine Schraube zusammengehalten wird, wobei der Schraubenkopf dabei ungeschützt in das dortige Prozessfluid hineinragt.

Aufgabe der Erfindung ist es, die Alterung von Extrusionsköpfen zu verzögern und die Wartungs-, Montage- und Verschleißkosten der Lochplatten der Extrusionsköpfe zu vermindern und die Korrosion von Bauteilen zu verringern.

Diese Aufgabe wird erfindungsgemäß mit einem Extrusionskopf mit den Merkmalen gemäß dem Anspruch 1 gelöst. Bevorzugte Ausführungsformen der Erfindung sind in den Unteransprüchen definiert. Die Erfindung betrifft einen Extrusionskopf mit Lochplatte einer Granulieranlage. Der Extrusionskopf weist einen Kopfteil und eine Lochplatte mit zentralem Anströmkegelteil, Düsenkanälen und Lochdüsen, die an dem Kopfteil lösbar fixiert ist, auf. Der Kopfteil des Extrusionskopfes weist mindestens einen zentralen Schmelzekanal auf, in den das Anströmkegelteil der Lochplatte hineinragt und den Schmelzestrom auf ringförmig angeordnete Düsenkanäle und auf die mindestens in einem Ring angeordneten Lochdüsen verteilt. Die Lochplatte ist mehrteilig aus einem Lochplattenverschleißeinsatz, einem Lochplattengrundkörper und einem Anströmkegelteil aufgebaut und weist ein korrosionsgeschütztes Befestigungsteil auf, das die mehrteilige Lochplatte lösbar zusammenhält. Das zentrale Befestigungsteil ist zentral, inmitten des mindestens einen Rings der Lochdüsen angeordnet. Ein Vorteil dieses Extrusionskopfes mit Kopfteil und daran angebrachter mehrteiliger Lochplatte ist, dass bei Erreichen einer Verschleißgrenze für die Lochplatte durch den Kontakt mit rotierenden Granuliermessern eines Granulators auf der Außenfläche der Lochplatte lediglich der Lochplattenverschleißeinsatz, der über ein Befestigungsteil mit weiteren Komponenten der mehrteiligen Lochplatte wie dem Lochplattengrundkörper und dem Anströmteil verbunden ist, auszutauschen ist. Die weiteren Teile der erfindungsgemäßen Lochplatte wie Lochplattengrundkörper und Befestigungsstück sowie das Anströmstück sind wiederverwendbar, zumal das Befestigungsteil korrosionsgeschützt innerhalb des Rings aus Lochdüsen des Lochplattenverschleißeinsatzes derart angeordnet ist, dass die Oberfläche des Befestigungsteils nicht mit dem Kühlwasser in Berührung steht, so dass das Befestigungsstück vor einer Alterung durch Korrosion mittels des Kühlwassers geschützt ist.

Der aufwendig und kostenintensiv herzustellende Lochplattengrundkörper und auch das Anströmkegelteil können weiter verwendet werden. Mit einem derartigen mehrteiligen Aufbau der Lochplatte hat der Betreiber die Möglichkeit, bei Verschleiß des Lochplattenverschleißeinsatzes die Lochplatte relativ einfach selbst wieder Instand zu setzen. Ein derartiger Lochplattenverschleißeinsatz ist deutlich kostengünstiger als eine recycelte oder gar neue Lochplatte herkömmlicher Art.

Weiterhin ist es von Vorteil, dass dieser Lochplattenverschleißeinsatz deutlich einfacher herzustellen ist als die komplexe aus dem Stand der Technik bekannte einstückige Lochplatte, da die mechanische Bearbeitung vereinfacht ist und ein Auflöten von Hartmetalleinsätzen in den Lochplattenverschleißeinsatz in kürzeren Prozesszeiten erfolgen kann, da deutlich weniger Masse aufgeheizt werden muss. Außerdem werden durch den mehrteiligen Aufbau verschiedene weitere Modifikationen der Aufbringung von Verschleißschichten auf eine Außenkontaktfläche ermöglicht. Auch eine Variante unter Einsatz von runden Verschleißhülsen ist in vorteilhafter Weise möglich. Darüber hinaus besteht durch den mehrteiligen Aufbau der erfindungsgemäßen Lochplatte die Möglichkeit, verschiedene Werkstoffe für die Lochplatte zu kombinieren, so dass der Lochplattengrundkörper aus einem niedrig legierten Eisen mit hoher Wärmeleitfähigkeit und der Lochplattenverschleißeinsatz aus einem entsprechend höher legierten Stahl mit möglichst geringer Wärmeleitfähigkeit aufgebaut werden kann, so dass das thermische Verhalten der Lochplatte insgesamt besser an den extremen Temperatursprung zwischen der Temperatur des zugeführten Schmelzestroms und der Temperatur des an den Lochplattenverschleißeinsatz angrenzenden Kühlwasserstroms beispielsweise eines Unterwassergranulators angepasst werden kann.

Die Lochdüsen sind in einer weiteren Ausführungsform der Erfindung vollständig in dem Lochplattenverschleißeinsatz angeordnet. Dabei weisen die Öffnungen, die in der Außenkontaktfläche in mindestens einem Ring angeordnet sind, einen geringeren Durchmesser auf als die zugehörigen Öffnungen auf der Innenfläche des Lochplattenverschleißeinsatzes. Das Einbringen derartiger Lochdüsen in den Lochplattenverschleißeinsatz ist gegenüber der bekannten Lochplatte vereinfacht, da sowohl die Außenkontaktfläche als auch die Innenfläche des Lochplattenverschleißeinsatzes für eine mechanische oder elektrochemische oder Laser- Bearbeitung frei zugänglich sind. Somit ist eine Einbringung in mindestens einem Ring angeordneter Lochdüsen in einen derartigen Lochplattenverschleißeinsatz in kostengünstiger Weise möglich.

In diesem Zusammenhang ist unter einem Ring von Lochdüsen nicht nur ein kreisförmiger Ring zu verstehen, sondern es sind vielmehr auch polygonale Ringe bis dreieckige oder viereckige ringförmige Anordnungen der Lochdüsen eingeschlossen. Entscheidend ist nur, dass die Befestigung des Lochplattenverschleißeinsatzes nicht über außerhalb eines derartigen Rings angeordnete und aus dem Stand der Technik bekannte Schraubverbindungen erfolgt, sondern innerhalb des Bereichs des Rings. Das dafür vorgesehene Befestigungsteil ist außerdem von der Innenfläche des Lochplattenverschleißeinsatzes aus in dem Lochplattenverschleißeinsatz verankert. Damit schützt das Material des Lochplattenverschleißeinsatzes und des Lochplattengrundkörpers in einer weiteren Ausführungsform der Erfindung das Befestigungsteil vor Korrosion durch das Kühlwasser.

Weiterhin ist es vorgesehen, dass der Lochplattengrundkörper Düsenkanäle aufweist, deren stromabwärtsseitige Enden mit den Lochdüsen des Lochplattenverschleißeinsatzes in Fluidverbindung stehen, und wobei der Lochplattenverschleißeinsatz an dem Lochplattengrundkörper durch das Befestigungsteil von der Innenfläche aus lösbar befestigt ist. Dazu kann das Befestigungsteil sowohl mit dem Lochplattengrundkörper als auch mit dem Lochplattenverschleißeinsatz in Eingriff stehen.

Erfindungsgemäß weist das Anströmkegelteil eine kegelförmige Mantelfläche und eine kreisförmige Grundfläche auf. Aus der kreisförmigen Grundfläche ragt das Befestigungsteil heraus und durch den Lochplattengrundkörper hindurch und ist in dem Lochplattenverschleißeinsatz verankert. Dazu ist ein speziell geformtes Anströmkegelteil erforderlich, das nicht mit seiner kreisförmigen Grundfläche integral oder stoffschlüssig mit dem Grundkörper verbunden ist, sondern einen aus der kreisförmigen Grundfläche zentral herausragenden Stift oder Bolzen aufweist, dessen Länge ausreicht, um durch den Lochplattengrundkörper hindurch zu ragen und um in dem Lochplattenverschleißeinsatz verankert zu werden.

Dazu weist die Innenfläche des Lochplattenverschleißeinsatzes ein zentral angeordnetes Gewindeblindloch auf, das mit einem Gewindebolzen als Befestigungsteil des Anströmkegelteils in Eingriff steht. Für ein Ansetzen eines Schraubenschlüssels können in die kegelförmige Mantelfläche des Anströmkegelteils Einbuchtungen bzw. Schlüsselflächen eingebracht sein, so dass es möglich ist, mit einem entsprechenden Schraubenschlüssel die mehrteilige Lochplatte mithilfe des Einströmkegelteils zusammenzuschrauben oder zu demontieren.

Aufgrund der Mehrteiligkeit der erfindungsgemäßen Lochplatte ist es darüber hinaus möglich, auf einfache Weise von der Innenseite des Lochplattenverschleißeinsatzes aus Wärmeisolationshohlräume benachbart zu den Lochdüsen in den Lochplattenverschleißeinsatz einzubringen. Diese Wärmeisolationshohlräume bewirken, dass die Kontaktfläche zwischen Lochplattenverschleißeinsatz und Lochplattengrundkörper vermindert wird und damit einen höheren Wärmeübergangswiderstand bildet, so dass die Wärmeisolation zwischen dem an der Außenkontaktfläche des Lochplattenverschleißeinsatzes anstehenden Kühlwassers und dem in den Lochdüsen geführten heißen Schmelzestrom verbessert wird.

Anstelle von ringförmig angeordneten Lochdüsen können diese auch in einer weiteren Ausführungsform der Erfindung in Gruppen auf einem Kreisring angeordnet sein, so dass die Außenkontaktfläche in Gruppen angeordnete Öffnungen der Lochdüsen aufweist.

Zum Zusammenbau von Lochplattengrundkörper und Lochplattenverschleißeinsatz sind Passbohrungen in der Innenfläche des Lochplattenverschleißeinsatzes und gegenüberliegend in einer Anschlussfläche des Lochplattengrundkörpers vorgesehen, in denen ein entsprechender Passstift angeordnet ist. Auf derartige Passstifte kann verzichtet werden, wenn die ringförmige Anordnung der Lochdüsen einen polygonalen Ring aufweist, der sich über eine Vertiefung in dem Lochplattengrundkörper abbildet. Der Fachmann kann zweckmäßig weitere Arten der eindeutigen Positionierung/Verdrehsicherung vorsehen.

Weiterhin ist es vorgesehen, dass die Außenkontaktfläche des Lochplattenverschleißeinsatzes eine verschleißfeste Beschichtung vorzugsweise aus Hartmetall, besonders bevorzugt Wolframkarbid oder Aluminiumoxid, oder aus Siliziumnitrid, Borkarbid, Siliziumkarbid oder Schichtfolgen dieser Materialien aufweist. Durch eine derartige verschleißfeste Beschichtung können Wartungs- und Instandsetzungsintervalle kostengünstig verlängert werden.

Andererseits ist es auch möglich, dass der gesamte Lochplattenverschleißeinsatz einen wärmeisolierenden, verschleißfesten Werkstoff, vorzugsweise einen aus der Gruppe hochlegierter Edelstahl mit Eisennitridprezipitaten, Aluminiumoxid, Siliziumnitrid, Borkarbid oder Siliziumkarbid, aufweist. Durch einen derartigen verschleißfesten Werkstoff, können Wartungs- und Instandsetzungsintervalle kostengünstig verlängert werden. Zusätzlich kann die thermische Isolation zwischen der Außenkontaktfläche, die mit Kühlwasser in Berührung stehen kann, und dem Lochplatten Grundkörper, der den heißen Schmelzestrom führt, verbessert werden.

Zur Einbringung der Lochdüsen in ein derartiges Lochplattenverschleißmaterial bietet sich das bereits oben erwähnte elektrochemische Verfahren oder ein Laser-Ablationsverfahren an, bei denen sowohl von der Außenkontaktfläche als auch von der Innenfläche des Lochplattenverschleißeinsatzes Bohrungen mit unterschiedlichem Durchmesser zur Ausbildung von Lochdüsen angebracht werden können. Andererseits ist es auch möglich, in den Lochplattenverschleißeinsatz vorgefertigte Lochdüsencinsätze einzupassen und mit dem Werkstoff des Lochplattenverschleißmaterials stoffschlüssig beispielweise durch Hartlöten zu verbinden.

Im Gegensatz zum Material des Lochplattenverschleißeinsatzes ist es von Vorteil, wenn der Lochplattengrundkörper ein wärmeleitendes Metall, vorzugsweise aus Aluminiumbronze oder einer niedrig legierten Eisenlegierung aufweist. Derartige Metalle sind leicht zu bearbeiten und können aufgrund der hohen Wärmeleitfähigkeit zur Temperierung des Extrusionskopfes bei Beginn des Extrusionsvorgangs vorgeheizt werden. Für eine derartige Aufheizphase können zusätzliche Heizkanäle in dem spanabhebend, leicht bearbeitbaren Material vorgesehen werden, die quer zu den Düsenkanälen angeordnet sein können.

In einer weiteren Ausführungsform der Erfindung ist es vorgesehen, dass ein Temperaturmessfühler in dem Lochplattengrundkörper angeordnet ist, der die Innenfläche des Lochplattenverschleißeinsatzes zur Temperaturerfassung kontaktiert, bevorzugt im Bereich der Düsenkanäle. Mit derartigen Temperaturmessfühlern kann das thermische Prozessfenster für den Extrusionsprozess und für das Ausbilden von Granulaten präziser eingegrenzt werden. Zweckmäßig kann auf Grundlage der so ermittelten Temperaturwerte auch eine Regelung oder Steuerung der Lochplattentemperatur vorgenommen werden.

Eine Verwendung eines derartigen Extrusionskopfes ist für Granulieranlagen vorgesehen mit dem_oben beschriebenen Extrusionskopf mit einer Extrusionsvorrichtung. So kann sich an diesen Extrusionskopf eine Granulieranlage für Granulierstränge oder eine Unterwassergranulation anschließen. Bei einer Granulieranlage mit einem Unterwassergranulator stehen dessen Granuliermesser rotierend mit der stationären Außenkontaktfläche des Lochplattenverschleißeinsatzes in Wirkverbindung und tragen dazu bei, den Lochplattenverschleißeinsatz verschleißend zu belasten.

Die Erfindung wird im Folgenden anhand der beispielhaft erläuterten Ausführungsform näher beschrieben werden.
- Figur 1: zeigt einen schematischen Querschnitt durch eine mehrteilige Lochplatte eines nicht erfindungsgemäßen Extrusionskopfes zum besseren Verständnis der Erfindung;
- Figur 2: zeigt eine schematische perspektivische Ansicht auf eine Oberseite der mehrteiligen Lochplatte gemäß Figur 1;
- Figur 3: zeigt eine schematische perspektivische Ansicht auf eine Außenkontaktfläche der mehrteiligen Lochplatte gemäß Figur 1;
- Figur 4: zeigt einen schematischen Querschnitt durch eine mehrteilige Lochplatte eines nicht erfindungsgemäßen Extrusionskopfes zum besseren Verständnis der Erfindung;
- Figur 5: zeigt einen schematischen Querschnitt durch eine mehrteilige Lochplatte des erfindungsgemässen Extrusionskopfes;
- Figur 6: zeigt einen schematischen Querschnitt durch einen Unterwassergranulator mit Extrusionskopf gemäß dem Stand der Technik nach DE 35 32 937 C2.

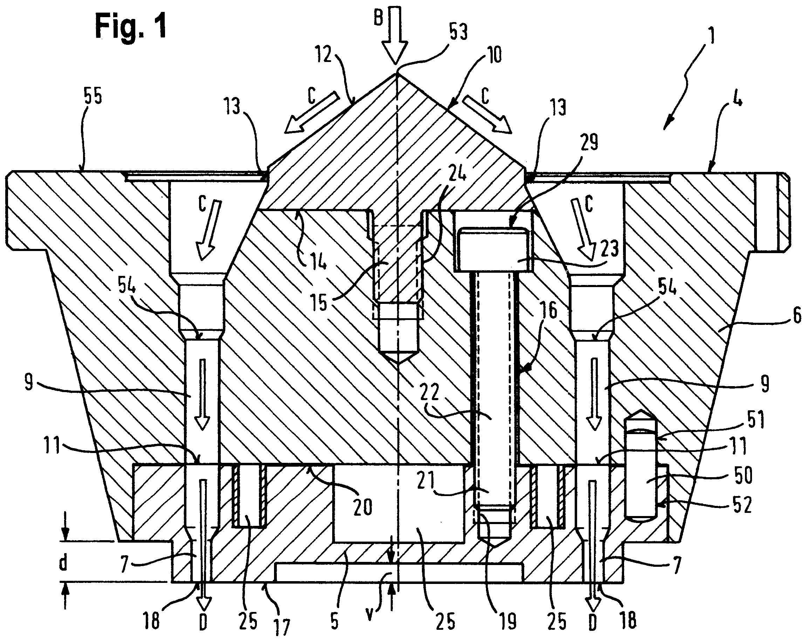

Figur 1 zeigt einen schematischen Querschnitt durch eine mehrteilige Lochplatte 4 eines nicht erfindungsgemäßen Extrusionskopfes 1 zum besseren Verständnis der Erfindung. Die Lochplatte 4 besteht in dieser ersten Ausführungsform der Erfindung aus drei Teilen, einem Lochplattenverschleißeinsatz 5, einem Lochplattengrundkörper 6 und einem Anströmkegelteil 10. Das Anströmkegelteil 10 verteilt einen Schmelzestrom in Pfeilrichtung B auf Düsenkanäle 9 in Pfeilrichtung C, die in dem Lochplattengrundkörper 6 vorgesehen sind. Das Anströmkegelteil 10 weist eine kegelförmige Mantelfläche 12 und eine kreisförmige Grundfläche 14 auf, aus der ein Gewindebolzen 15 herausragt, der mit einem Gewindeloch 24 des Lochplattengrundkörpers 6 in Eingriff steht. Zum Einschrauben des Gewindebolzens 15 in das Gewindeloch 24 des Lochplattengrundkörpers 6 sind auf der kegelförmigen Mantelfläche 12 des Anströmkegelteils 10 Einbuchtungen 13 als Schlüsselflächen vorgesehen, um einen Schraubenschlüssel ansetzen zu können.

Der Lochplattenverschleißeinsatz 5 weist auf seiner in der Darstellung der Figur 1 unteren Außenkontaktfläche 17 Öffnungen 18 von Lochdüsen 7 auf, aus denen Granulatstränge in Pfeilrichtung D austreten können. Die Einbaulage der in Figur 1 gezeigten Anordnung ist abweichend davon üblicher Weise in senkrechter anstelle der dargestellten waagrechten Ausrichtung. Die Lochdüsen 7 stehen mit stromabwärtsseitigen Enden 11 der Düsenkanäle 9 des Lochplattengrundkörpers 6 in Wirkverbindung. Um dieses zu ermöglichen, weist eine Innenfläche 20 entsprechende Übergänge auf und in dieser Ausführungsform zusätzlich mindestens einen Passstift 50, der in einer Passbohrung 52 angeordnet ist und aus der Innenfläche 20 in eine Passbohrung 51 des Lochplattengrundkörpers 6 hineinragt. Mit diesem Passstift 50 wird sichergestellt, dass der Übergang zwischen den Düsenkanälen 9 des Lochplattengrundkörpers 6 und den Lochdüsen 7 des Lochplattenverschleißeinsatzes 5 beim Zusammenbau der Lochplatte 4 aus Anströmkegelteil 10, Lochplattengrundkörper 6 und Lochplattenverschleißeinsatz 5 passgenau erfolgen kann.

Um die mehrteilige Lochplatte 4 zusammenzuhalten, ist einerseits der oben bereits erwähnte Gewindebolzen 15 des Anströmkegelteils 10 vorgesehen und zusätzlich ein Befestigungsteil 29, das in dieser ersten Ausführungsform der Erfindung von drei auf einem Kreisumfang verteilten Schraubverbindungen 16 ausgeführt ist. Die Schraubverbindungen 16 weisen Gewindeschrauben 22 auf, deren Gewindeenden 21 in einem Gewindeblindloch 19 des Lochplattenverschleißeinsatzes 5 lösbar fixiert sind, wobei zugehörige Schraubköpfe 23 der Gewindeschrauben 22 von der Grundfläche 14 des Anströmkegelteils 10 abgedeckt werden.

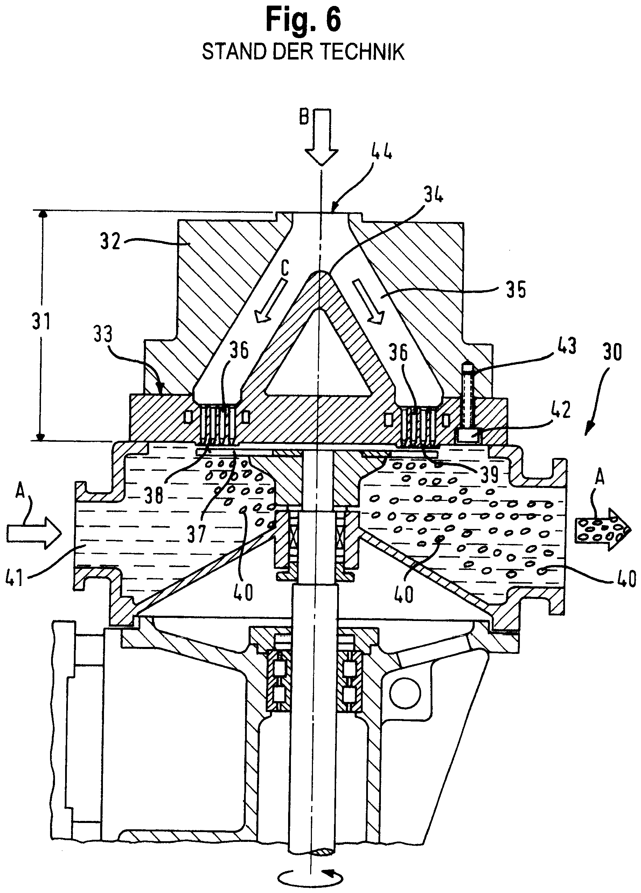

Somit befindet sich das Befestigungsteil 29 innerhalb eines Bereichs der kreisringförmig angeordneten Lochdüsen 7 des Lochplattenverschleißeinsatzes 5 und nicht außerhalb eines derartigen Rings von Öffnungen 18 der Lochdüsen 7. Somit ist das Befestigungsteil 29 vollständig geschützt, so dass keine Oberfläche des Befestigungsteils 29 mit der Schmelze oder mit dem in Figur 6 gezeigten Kühlwasser in Berührung kommt. Da in dieser Darstellung-mindestens drei derartige Gewindeschrauben 22 auf den Umfang eines Befestigungskreises verteilt angeordnet sind, werden die zwei weiteren Gewindeschrauben in der hier gezeigten Schnittebene nicht abgebildet. Der Werkstoff, aus dem das Anströmkegelteil 10 und der Lochplattengrundkörper 6 gefertigt sind, ist gegenüber dem Lochplattenverschleißeinsatz 5 thermisch besser leitend und vorzugsweise aus einem Metall wie beispielsweise einer Aluminiumbronze oder einem niedrig legierten Eisen hergestellt.

Der Lochplattenverschleißeinsatz 5 kann hingegen ein hoch verschleißfestes Material aus einem hochlegierten Stahl beispielsweise mit Nitridprezipitaten im Kristallgefüge oder aus einem Keramikmaterial wie Aluminiumoxid, Siliziumnitrid, Borkarbid oder Siliziumkarbid aufweisen. Ferner können in dem Lochplattenverschleißeinsatz 5 Wärmeisolationshohlräume 25 vorgesehen sein, die den Wärmeübergang zwischen dem Lochplattengrundkörper 6 und der Innenfläche 20 des Lochplattenverschleißeinsatzes 5 vermindern. Damit wird die Wärmeisolation zwischen dem heißen Schmelzestrom und dem an der Außenkontaktfläche 17 des Lochplattenverschleißeinsatzes 5 vorbeiströmenden Kühlwasser, beispielsweise eines Unterwassergranulators, verbessert. Wie Figur 6 zeigt, streifen Granuliermesser rotierend über die Außenkontaktfläche 17 des Lochplattenverschleißeinsatzes 5 und trennen die Granulierstränge, die in Pfeilrichtung D aus den Öffnungen 18 extrudiert werden, in Granulate auf. Die Öffnungen 18 sind auf einem scheibenförmigen Podest angeordnet, das gegenüber dem Zentrum des Lochplattenverschleißeinsatzes 5 um eine Verschleißdicke v herausragt. Sobald diese Verschleißdicke abgetragen ist, ist die Verschleißgrenze des Lochplattenverschleißeinsatzes 5 erreicht und der Lochplattenverschleißeinsatz 5 sollte ausgewechselt oder aufbereitet werden.

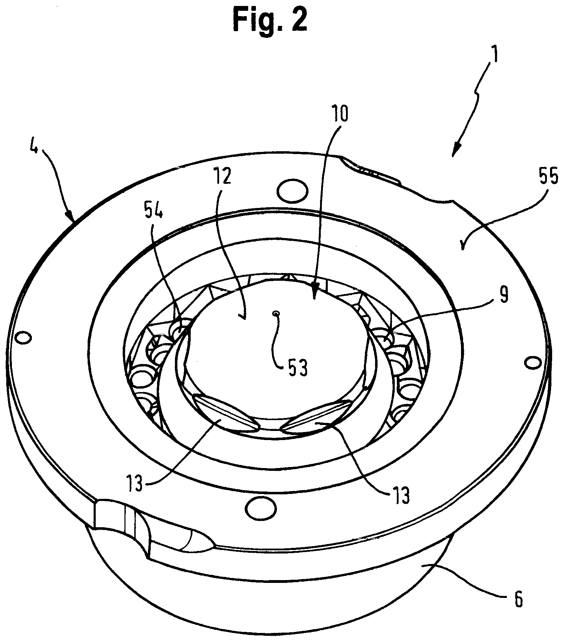

Figur 2 zeigt eine schematische perspektivische Ansicht auf eine Oberseite 55 der mehrteiligen Lochplatte 4 gemäß Figur 1. Diese Oberseite 55 ist in der üblichen Einbaulage der Anordnung (siehe Ausführung dazu oben zu Figur 1) senkrecht verlaufend ausgerichtet. Die Lochplatte 4 wird mit der Oberseite 55 mit einem Kopfteil des hier nicht vollständig gezeigten Extrusionskopfes 1 einer ersten Ausführungsform der Erfindung verbunden. Mit dieser perspektivischen Ansicht wird die Spitze 53 des Anströmkegelteils 10, die über die Oberseite 55 der Lochplatte hinausragt, sichtbar. Zusätzlich sind auf der kegelförmigen Mantelfläche 12 des Anströmkegelteils 10 die Einbuchtungen 13 als Schlüsselflächen zum Ansetzen eines Schraubenschlüssels erkennbar. Der Schmelzestrom wird von dem Anströmkegelteil 10 auf die in Figur 2 sichtbaren Öffnungen 54 von Düsenkanälen 9 verteilt und über die Düsenkanäle 9 des Lochplattengrundkörpers 6 den hier nicht sichtbaren Lochdüsen eines Lochplattenverschleißeinsatzes zugeführt.

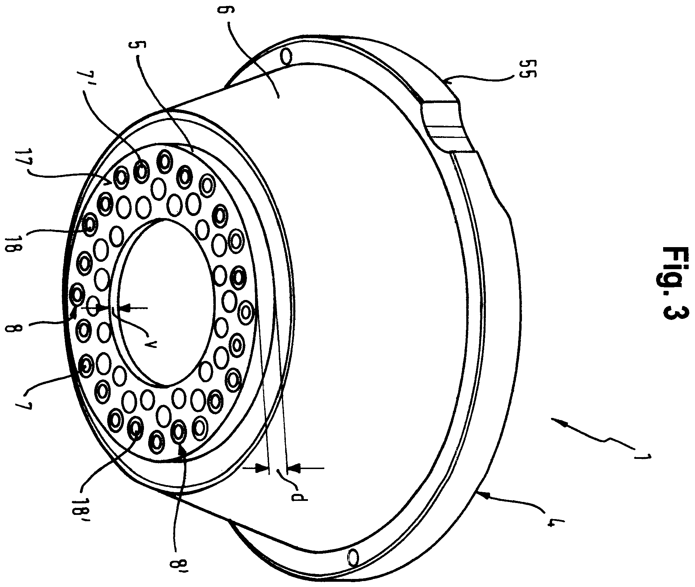

Figur 3 zeigt eine schematische perspektivische Ansicht auf eine Außenkontaktfläche 17 der mehrteiligen Lochplatte 4 gemäß Figur 1. Die hier sichtbaren Öffnungen 18 eines ersten Rings von Lochdüsen sind auf einem größeren Ringdurchmesser angeordnet als die versetzt angeordneten Öffnungen 18' eines zweiten Rings mit den Öffnungen 18' von entsprechenden versetzt angeordneten Lochdüsen 7'. Die ringförmige Außenkontaktfläche 17 des Lochplattenverschleißeinsatzes 5 ragt aus dem Lochplattengrundkörper 6 heraus und kann folglich bis zu einer Verschleißdicke v von den oben erwähnten und in Figur 6 gezeigten Granuliermessern beansprucht werden, bevor der Lochplattenverschleißeinsatz 5 auszutauschen ist. Die in dieser Ansicht zu sehenden zusätzlichen Kreisringe, benachbart zu den Öffnungen 18 bzw. 18', sind Positionen von in Figur 1 gezeigten Hohlräumen 25, die zu dem Kühlwasser hin in den gezeigten Positionen verschlossen sind.

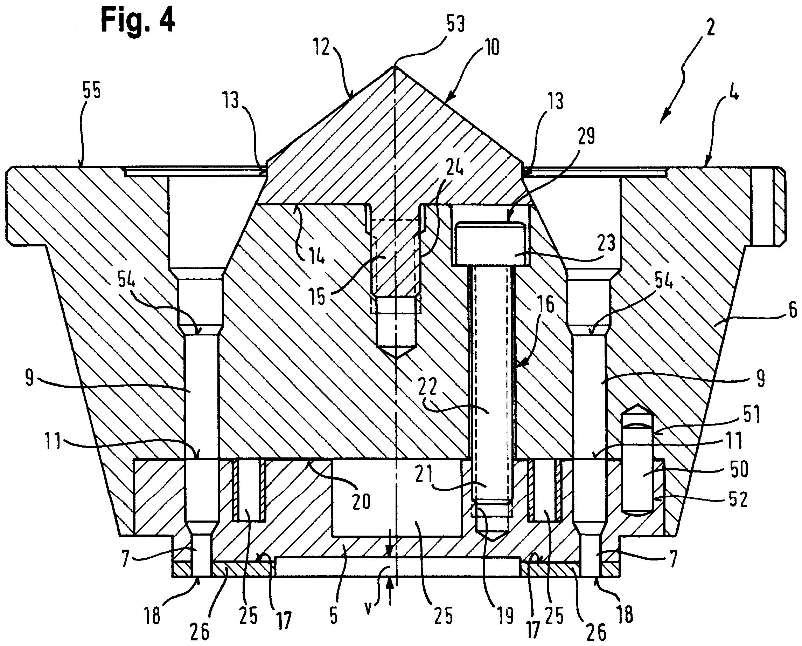

Figur 4 zeigt einen schematischen Querschnitt durch eine mehrteilige Lochplatte 4 eines nicht erfindungsgemäßen Extrusionskopfes 2 zum besseren Verständnis der Erfindung. Komponenten mit gleichen Funktionen wie in den vorhergehenden Figuren werden mit gleichen Bezugszeichen gekennzeichnet und nicht extra erörtert.

Der Unterschied zwischen der Darstellung gemäß Figur 1 und der Darstellung gemäß Figur 4 besteht darin, dass der Lochplattenverschleißeinsatz 5 auf seiner Außenkontaktfläche 17 eine Beschichtung 26 aus einem verschleißfesten Material aufweist. Dieses verschleißfeste Material kann eines aus der Gruppe Hartmetall, besonders bevorzugt Wolframkarbid oder Aluminiumoxid, oder aus Siliziumnitrid, Borkarbid, Siliziumkarbid oder Mischformen oder Schichtfolgen dieser Materialien aufweisen, so dass die Verschleißfestigkeit des Lochplattenverschleißeinsatzes 5 weiter erhöht wird und die Standzeit der erfindungsgemäßen Lochplatte 4 vergrößert wird. Zum Aufbringen einer derartigen Beschichtung 26 können chemische Abscheideverfahren wie CVD (Chemical Vapour Deposition), physikalische Abscheideverfahren wie PVD (Physical Vapour Deposition) oder elektrochemische Abscheideverfahren eingesetzt werden. Auch eine thermische Isolierschicht kann so vorgesehen sein.

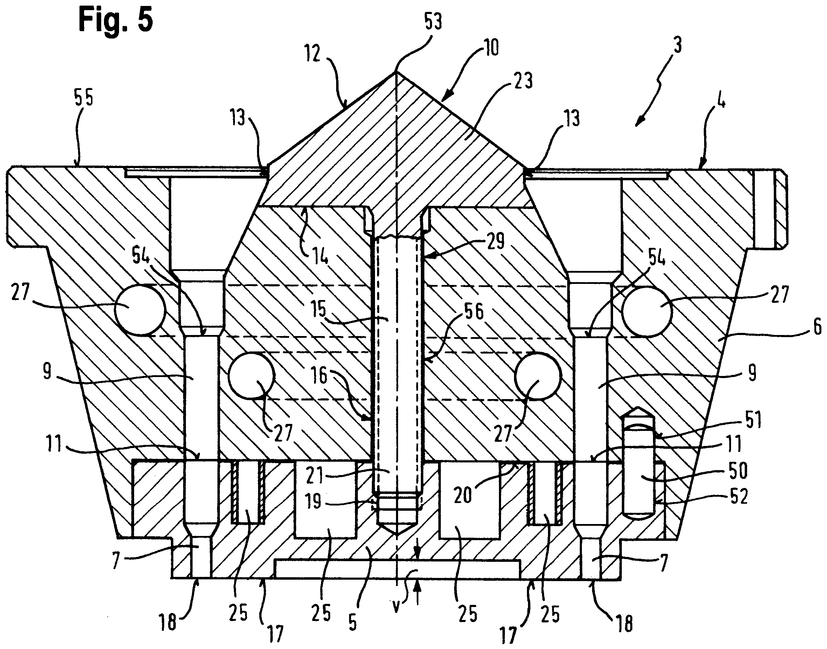

Figur 5 zeigt einen schematischen Querschnitt durch eine mehrteilige Lochplatte 4 eines Extrusionskopfes 3 gemäß der Erfindung. Die erfindungsgemäße Lochplatte 4 unterscheidet sich von den vorhergehenden Lochplatten dadurch, dass das in den vorhergehenden Figuren gezeigte Befestigungsteil 29 hier von einem zentralen Befestigungsteil gebildet wird, das aus der kreisförmigen Grundfläche 14 des Anströmkegelteils 10 herausragt und sich durch den Lochplattengrundkörper 6 hindurch in einer Durchgangsbohrung 56 erstreckt und in einem zentralen Gewindeblindloch 19 in dem Lochplattenverschleißeinsatz 5 mit einem Gewindeende 21 in Eingriff steht, so dass das Anströmkegelteil 10 einerseits das zentrale Befestigungsteil 29 abdeckt und andererseits gleichzeitig den Schraubenkopf 23 des Befestigungsteils 29 bildet.

Ein derartiges zentrales Befestigungsteil 29 beansprucht erfindungsgemäß in dieser Ausführungsform den geringsten Raumbedarf in dem Lochplattengrundkörper 6 mit nur einer einzigen zentralen Durchgangsbohrung 56. Ferner wird nun auch der geringste Raumbedarf mit nur einem einzigen Gewindeblindloch 19 in dem Lochplattenverschleißeinsatz 5 benötigt, um die mehrteilige Lochplatte 4 zusammenzuhalten. Eine derartige Schraubverbindung muss jedoch die Summe der Druckkräfte, die auf den Lochdüsen lasten, aufnehmen. Zusätzlich zeigt Figur 5 die Möglichkeit, in dem Lochplattengrundkörper 6 Heizkanäle 27 unterzubringen, z.B. indem diese beim Guß des Lochplattengrundkörpers 6 mit berücksichtigt werden oder bei mehrteiligem Aufbau desselben (nicht gezeigt) entsprechend eingefräst werden, die quer und in der Nachbarschaft der Düsenkanäle 9 angeordnet sein können, um in einer Anfangsphase des Extrusionsprozesses den Extrusionskopf 3 in kritischen Bereichen des Lochplattengrundkörpers 6 aufzuheizen. Um das Fluchten der jeweiligen Lochdüse 7 mit dem zugeordneten Düsenkanal 9 zu gewährleisten, ist eine zusätzliche Verdrehsicherung z.B. über einen Passstift 50 zweckmäßig. Ferner sollte zweckmäßig das Fluchten von Anströmkegelteil 10 und dem Lochplattengrundkörper 6 sichergestellt werden, beispielsweise durch das Vorsehen eines Passabschnitts des in den Grundkörper 6 ragenden Abschnitts des Anströmkegelteils 10, wobei dieser Passabschnitt dann zweckmäßig einen größeren Durchmesser als den Durchmesser des Gewindebolzens 15 aufweisen sollte.

### Bezugszeichenliste

- 1: Extrusionskopf (1. nicht erfindungsgemässe Ausführungsform)
- 2: Extrusionskopf (2. nicht erfindungsgemässe Ausführungsform)
- 3: Extrusionskopf (3. erfindungsgemässe Ausführungsform)
- 4: Lochplatte
- 5: Lochplattenverschleißeinsatz
- 6: Lochplattengrundkörper
- 7, 7': Lochdüsen
- 9: Düsenkanal
- 10: Anströmkegelteil
- 11: stromabwärtsseitiges Ende
- 12: kegelförmige Mantelfläche
- 13: Einbuchtung
- 14: Grundfläche
- 15: Gewindebolzen
- 16: Schraubverbindung
- 17: Außenkontaktfläche
- 18: Öffnungen
- 18': Öffnungen
- 19: Gewindeblindloch
- 20: Innenfläche
- 21: Gewindeende
- 22: Gewindeschraube
- 23: Schraubenkopf
- 24: Gewindeloch
- 25: Wärmeisolationshohlraum
- 26: Beschichtung
- 27: Heizkanal
- 29: Befestigungsteil
- 30: Granulieranlage bzw. Unterwassergranulator
- 31: Extrusionskopf gemäß dem Stand der Technik
- 32: Kopfteil
- 33: Lochplatte gemäß dem Stand der Technik
- 34: Anströmkegel
- 35: Düsenkanäle
- 36: Lochdüsen
- 37: Granuliermesser
- 38: Außenkontaktfläche
- 39: Öffnungen
- 40: Granulate
- 41: Kühlwasserstrom
- 42: Schraubenkopf
- 43: Schraubverbindung
- 44: Schmelzekanal
- 50: Passstift
- 51: Passbohrung
- 52: Passbohrung
- 53: Spitze des Anströmkegelteils
- 54: Öffnung der Düsenkanäle
- 55: Oberseite der Lochplatte
- 56: Durchgangsbohrung durch den Lochplattengrundkörper

- A: Pfeilrichtung
- B: Pfeilrichtung
- C: Pfeilrichtung
- D: Pfeilrichtung
- v: Verschleißdicke

## Patentansprüche

1. Extrusionskopf mit Lochplatte (4) einer Granulieranlage (30), wobei der Extrusionskopf (1, 2, 3) einen Kopfteil (32) und eine Lochplatte (4) aufweist, und wobei die Lochplatte (4) mit zentralem Anströmkegel (34), Düsenkanälen (9) und Lochdüsen (7) an dem Kopfteil (32) lösbar fixiert ist, wobei der Kopfteil (32) des Extrusionskopfes (1, 2, 3) mindestens einen zentralen Schmelzekanal (44) aufweist, in den der Anströmkegel (34) der Lochplatte (4) hineinragt und den Schmelzestrom auf ringförmig angeordnete Düsenkanäle (9) und auf die mindestens in einem Ring angeordneten Lochdüsen (7) verteilt,
**dadurch gekennzeichnet, dass**
die Lochplatte (4) mehrteilig aus einem Lochplattenverschleißeinsatz (5), einem Lochplattengrundkörper (6) und einem Anströmkegelteil (10) aufgebaut ist und ein zentral angeordnetes korrosionsgeschütztes Befestigungsteil (29) aufweist, das die mehrteilige Lochplatte (4) zusammenhält, und wobei das zentrale Befestigungsteil (29) zentral inmitten des mindestens einen Rings der Lochdüsen (7) angeordnet ist, wobei das Anströmkegelteil (10) eine kegelförmige Mantelfläche (12) und eine kreisförmige Grundfläche (14) aufweist, aus der das zentrale Befestigungsteil (29) heraus- und durch den Lochplattengrundkörper (6) hindurch ragt und in dem Lochplattenverschleißeinsatz (5) verankert ist.

2. Extrusionskopf nach Anspruch 1, **dadurch gekennzeichnet, dass** die Lochdüsen (7) in dem Lochplattenverschleißeinsatz (5) angeordnet sind.

3. Extrusionskopf nach Anspruch 2, **dadurch gekennzeichnet, dass** der Lochplattengrundkörper (6) Düsenkanäle (9) aufweist, deren stromabwärtsseitige Enden (11) mit den Lochdüsen (7) des Lochplattenverschleißeinsatzes (5) in Fluidverbindung stehen, und wobei der Lochplattenverschleißeinsatz (5) an dem Lochplattengrundkörper (6) durch das Befestigungsteil (29) lösbar befestigt ist.

4. Extrusionskopf nach einem der vorhergehenden Ansprüche, **dadurch gekennzeichnet, dass** der Lochplattenverschleißeinsatz (5) eine Außenkontaktfläche (17) mit ringförmig angeordneten Öffnungen (18) der Lochdüsen (7) und eine der Außenkontaktfläche (17) gegenüberliegende Innenfläche (20) aufweist, in die das Befestigungsteil (29) eingreift.

5. Extrusionskopf nach Anspruch 4, **dadurch gekennzeichnet, dass** die Innenfläche (20) des Lochplattenverschleißeinsatzes (5) mindestens ein zentral angeordnetes Gewindeblindloch (19) aufweist, das mit einem Gewindebolzen (15) als Befestigungsteil (29) des Anströmkegelteils (10) in Eingriff steht, wobei die kegelförmige Mantelfläche (12) des Anströmkegelteils (10) Einbuchtungen (13) für ein Ansetzen eines Schraubschlüssels aufweist

6. Extrusionskopf nach einem der Ansprüche 2 bis 5, **dadurch gekennzeichnet, dass** der Lochplattenverschleißeinsatz (5) benachbart zu den Lochdüsen (7) Wärmeisolationshohlräume (25) aufweist.

7. Extrusionskopf nach einem der Ansprüche 1 bis 4, **dadurch gekennzeichnet, dass** der Lochplattenverschleißeinsatz (5) auf einem Kreisring der Außenkontaktfläche (17) in Gruppen angeordnete Öffnungen (18) der Lochdüsen (7) aufweist.

8. Extrusionskopf nach einem der vorhergehenden Ansprüche, **dadurch gekennzeichnet, dass** die Außenkontaktfläche (17) des Lochplattenverschleißeinsatzes (5) eine verschleißfeste Beschichtung vorzugsweise aus Hartmetall, besonders bevorzugt Wolframkarbid oder Aluminiumoxid, oder aus Siliziumnitrid, Borkarbid, Siliziumkarbid oder Schichtfolgen dieser Materialien aufweist.

9. Extrusionskopf nach einem der vorhergehenden Ansprüche, **dadurch gekennzeichnet, dass** der Lochplattenverschleißeinsatz (5) einen wärmeisolierenden, verschleißfesten Werkstoff, vorzugsweise einen aus der Gruppe hochlegierter Edelstahl mit Eisennitridprezipitaten, Aluminiumoxid, Siliziumnitrid, Borkarbid oder Siliziumkarbid, aufweist.

10. Extrusionskopf nach einem der vorhergehenden Ansprüche, **dadurch gekennzeichnet, dass** der Lochplattengrundkörper (6) ein wärmeleitendes Metall, vorzugsweise Aluminiumbronze, oder eine niedrig legierte Eisenlegierung aufweist.

11. Extrusionskopf nach einem der vorhergehenden Ansprüche, **dadurch gekennzeichnet, dass** in dem Lochplattengrundkörper (6) ringförmige Heizkanäle (27) benachbart und quer zu den Düsenkanälen (9) angeordnet sind.

12. Extrusionskopf nach einem der vorhergehenden Ansprüche, **dadurch gekennzeichnet, dass** ein Temperaturmessfühler in dem Lochplattengrundkörper (6) angeordnet ist, der die Innenfläche (20) des Lochplattenverschleißeinsatzes (5) zur Temperaturerfassung kontaktiert, bevorzugt im Bereich der Düsenkanäle (9).

13. Granulieranlage, mit einem Extrusionskopf (1, 2, 3) nach einem der vorhergehenden Ansprüche.

## Claims

1. Extrusion head having a perforated plate (4) of a granulating system (30), wherein the extrusion head (1, 2, 3) has a head part (32) and a perforated plate (4), and wherein the perforated plate (4) with a central inflow cone (34), nozzle channels (9), and perforated dies (7) is detachably secured to the head part (32), wherein the head part (32) of the extrusion head (1, 2, 3) has at least one central melt channel (44) into which the inflow cone (34) of the perforated plate (4) projects and distributes the melt flow among nozzle channels (9) arranged in the shape of a ring and among the perforated dies (7) arranged in at least one ring,
**characterized in that**
the perforated plate (4) is constructed in multiple parts of a perforated-plate wear insert (5), a perforated-plate main body (6), and an inflow cone part (10), and has a centrally located, corrosion-protected fastening part (29) that holds the multi-part perforated plate (4) together, and wherein the central fastening part (29) is positioned centrally in the middle of the at least one ring of the perforated dies (7), wherein the inflow cone part (10) has a conical lateral surface (12) and a circular base (14), and the central fastening part (29) projects outward from the base and through the perforated-plate main body (6) and is anchored in the perforated-plate wear insert (5).

2. Extrusion head according to claim 1, **characterized in that** the perforated dies (7) are located in the perforated-plate wear insert (5).

3. Extrusion head according to claim 2, **characterized in that** the perforated-plate main body (6) has nozzle channels (9) whose ends (11) on the downstream side are in fluid communication with the perforated dies (7) of the perforated-plate wear insert (5), and wherein the perforated-plate wear insert (5) is detachably fastened to the perforated-plate main body (6) by the fastening part (29).

4. Extrusion head according to one of the preceding claims, **characterized in that** the perforated-plate wear insert (5) has an outer contact surface (17) with openings (18) of the perforated dies (7) arranged in the shape of a ring, and has an inner surface (20) which is opposite the outer contact surface (17) and in which the fastening part (29) engages.

5. Extrusion head according to claim 4, **characterized in that** the inner surface (20) of the perforated-plate wear insert (5) has at least one centrally located, threaded blind hole (19) that engages a threaded stud (15) as the fastening part (29) of the inflow cone part (10), wherein the conical lateral surface (12) of the inflow cone part (10) has indentations (13) for application of a wrench.

6. Extrusion head according to one of claims 2 to 5, **characterized in that** the perforated-plate wear insert (5) has thermal insulation cavities (25) adjacent to the perforated dies (7).

7. Extrusion head according to one of claims 1 to 4, **characterized in that** the perforated-plate wear insert (5) has openings (18) of the perforated dies (7) arranged in groups on an annulus of the outer contact surface (17).

8. Extrusion head according to one of the preceding claims, **characterized in that** the outer contact surface (17) of the perforated-plate wear insert (5) has a wear-resistant coating preferably of hard metal, especially preferably tungsten carbide or aluminum oxide, or of silicon nitride, boron carbide, silicon carbide, or sequences of layers of these materials.

9. Extrusion head according to one of the preceding claims, **characterized in that** the perforated-plate wear insert (5) has a thermally insulating, wear-resistant material, preferably one from the group consisting of high alloy stainless steel with iron nitride precipitates, aluminum oxide, silicon nitride, boron carbide, or silicon carbide.

10. Extrusion head according to one of the preceding claims, **characterized in that** the perforated-plate main body (6) has a heat-conducting metal, preferably aluminum bronze, or a low-alloy iron alloy.

11. Extrusion head according to one of the preceding claims, **characterized in that** annular heating channels (27) are located in the perforated-plate main body (6) adjacent and transverse to the nozzle channels (9).

12. Extrusion head according to one of the preceding claims, **characterized in that** a temperature sensor, which contacts the inner surface (20) of the perforated-plate wear insert (5) for temperature measurement, is located in the perforated-plate main body (6), preferably in the region of the nozzle channels (9).

13. Granulating system having an extrusion head (1, 2, 3) according to one of the preceding claims.

## Revendications

1. Tête extrudeuse comportant une plaque perforée (4) pour un granulateur (30), la tête extrudeuse (1, 2, 3) présentant une tête (32) et une plaque perforée (4), la plaque perforée (4) avec cône d'écoulement central (34), canaux de buse (9) et buses perforées (7) étant fixée de façon amovible sur la tête (32), la tête (32) de la tête extrudeuse(1, 2, 3) comportant au moins un canal central pour masse fondue (44) dans lequel fait saillie le cône d'écoulement (34) de la plaque perforée (4) qui distribue le courant de masse fondue sur les canaux de buses (9) agencés en forme de cercle et les buses perforées (7) agencées en au moins un cercle
**caractérisée en ce que**
la plaque perforée (4) est constituée de plusieurs parties, d'un insert d'usure pour plaque perforée (5), d'un corps de base (6), d'une partie conique d'écoulement (10)et d'une fixation (29) à revêtement anticorrosion agencée au milieu maintenant les différentes parti es de la plaque perforée (4) ensemble et la fixation centrale (29) étant agencée au centre du au moins un cercle de buses perforées (7), la partie conique d'écoulement (10) présentant une surface d'enveloppe conique (12) et une embase circulaire (14) d'où se projette la fixation centrale (29) traversant le corps de base de la plaque perforée (6) et étant ancrée dans l'insert d'usure (5) de la plaque perforée.

2. Tête extrudeuse selon la revendication 1, **caractérisée en ce que** les buses perforées (7) sont agencées dans l'insert d'usure de la plaque perforée (5).

3. Tête extrudeuse selon la revendication 2, **caractérisée en ce que** le corps de base (6) de la plaque perforée présente des canaux de buses (9) dont les extrémités en aval (11) sont en communication fluide avec les buses perforées (7) de l'insert d'usure de la plaque perforée (5), l'insert d'usure (5) étant fixé de façon amovible sur le corps de base (6) de la plaque perforée au moyen de la fixation (29).

4. Tête extrudeuse selon une des revendications précédentes, **caractérisée en ce que** l'insert d'usure de la plaque perforée (5) présente une surface de contact extérieure (17) avec des orifices (18) de buses perforées (7) agencés en un cercle et une surface de contact intérieure (20) faisant face à la surface de contact extérieure (17)dans laquelle s'engage la fixation (29).

5. Tête extrudeuse selon la revendication 4, **caractérisée en ce que** la surface intérieure (20) de l'insert d'usure de la plaque perforée (5) présente au moins un trou borgne fileté (19) qui est en prise avec un boulon fileté (15)servant de fixation (29) de la partie conique d'écoulement (10), l'enveloppe conique (12) de la partie conique d'écoulement (10) présentant des échancrures (13) pour recevoir la clé réglable.

6. Tête extrudeuse selon une des revendications 2 à 5, **caractérisée en ce que** l'insert d'usure de la plaque perforée (5) présente des espaces creux d'isolation thermique (25) à proximité des buses perforées (7).

7. Tête extrudeuse selon une des revendications 1 à 4, **caractérisée en ce que** l'insert d'usure de la plaque perforée (5) présente des orifices (18) de buses perforées (7) agencés en groupes sur un anneau circulaire de la surface de contact extérieure (17).

8. Tête extrudeuse selon une des revendications précédentes **caractérisée en ce que** la surface de contact extérieure (17) de l'insert d'usure de la plaque perforée (5) présente un revêtement anti-usure en métal dur, de préférence en carbure de wolfram ou oxyde d'aluminium ou nitrure de silicium, carbure de bore, carbure de silicium ou de couches successives de ces matériaux.

9. Tête extrudeuse selon une des revendications précédentes **caractérisée en ce que** l'insert d'usure de la plaque perforée (5) présente un matériau thermo-isolant, résistant à l'usure, de préférence un matériau du groupe des aciers spéciaux fortement alliés avec des précipités de nitrure de fer, oxyde d'aluminium, nitrure de silicium, carbure de bore ou carbure de silicium.

10. Tête extrudeuse selon une des revendications précédentes **caractérisée en ce que** le corps de base de la plaque perforée (6) présente un matériau conducteur, de préférence du bronze d'aluminium ou bien un alliage de fer, faiblement allié.

11. Tête extrudeuse selon une des revendications précédentes **caractérisée en ce que** dans le corps de base de la plaque perforée (6) sont agencés des canaux chauffants (27) circulaires à proximité ou perpendiculaires aux canaux des buses (9).

12. Tête extrudeuse selon une des revendications précédentes **caractérisée en ce qu'**un capteur de température est agencé dans le corps de base de la plaque perforée (6) en contact avec la surface intérieure (20) de l'insert d'usure de la plaque perforée (5), de préférence dans la zone des canaux des buses (9).

13. Granulateur comportant une tête extrudeuse (1, 2, 3) selon une des revendications précédentes.
